(19) Europäisches Patentamt
European Patent Office
Office européen des brevets

(11) **EP 1 499 008 B1**

(12) **EUROPÄISCHE PATENTSCHRIFT**

(45) Veröffentlichungstag und Bekanntmachung des Hinweises auf die Patenterteilung:
**08.10.2008 Patentblatt 2008/41**

(51) Int Cl.:
*H02P 6/10* (2006.01)  *H02P 6/18* (2006.01)
*H02P 6/14* (2006.01)

(21) Anmeldenummer: **04011481.1**

(22) Anmeldetag: **14.05.2004**

(54) **Verfahren und Steuersystem zur elektronischen Kommutierung eines bürstenlosen Gleichstrommotors**

Method and control system for electronic commutation of a brushless DC motor

Méthode et système de commande pour la commutation électronique d'un moteur DC sans balais

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.07.2003 DE 10332381**

(43) Veröffentlichungstag der Anmeldung:
**19.01.2005 Patentblatt 2005/03**

(73) Patentinhaber: **ebm-papst Mulfingen GmbH & Co.KG**
**74673 Mulfingen (DE)**

(72) Erfinder:
• **Lelkes, András, Dr.-Ing.**
**70499 Stuttgart (DE)**
• **Krotsch, Jens, Dipl.-Ing. (FH)**
**97996 Niederstetten (DE)**

(74) Vertreter: **Patentanwälte**
**Dr. Solf & Zapf**
**Candidplatz 15**
**81543 München (DE)**

(56) Entgegenhaltungen:
**US-A- 5 569 994        US-B1- 6 369 535**
**US-B1- 6 429 614**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Kommutierung eines bürstenlosen Gleichstrommotors gemäß dem Oberbegriff des Anspruchs 1 sowie ein entsprechendes Steuersystem nach dem Oberbegriff des Anspruchs 14. Ferner betrifft die Erfindung auch einen bürstenlosen Gleichstrommotor, der zur Kommutierung nach dem erfindungsgemäßen Verfahren mit einem solchen Steuersystem ausgestattet ist.

Permanenterregte, elektronisch kommutierte Gleichstrommotoren (sog. EC-Motoren; EC= electronically commutated) werden heute für viele Anwendungen eingesetzt, weil sie im Vergleich zu Motoren, die mechanische Kommutatoren (Bürsten) aufweisen, durch Vermeidung von Verschleißteilen (Kommutator, Bürsten, Schleifringe) auch ohne besondere Wartungsmaßnahmen eine hohe Lebenserwartung haben. Zudem zeichnen sich solche permanenterregte Motoren durch einen guten Wirkungsgrad und hohe Energiedichte aus. Ein wichtiger Anwendungsbereich solcher EC-Motoren sind Ventilatoren, bei denen ein geräuscharmer Betrieb eine immer größere Rolle spielt. Diesbezüglich sind bekannte Motor-Ausführungen und Kommutierungverfahren noch verbesserungsbedürftig.

Es sind EC-Motoren mit unterschiedlichen Wicklungsausführungen bekannt. Weit verbreitet sind ein-,zwei- und dreisträngige Motoren. Sowohl ein- als auch zweisträngige Ausführungen erzeugen statt einem Drehfeld nur ein pulsierendes Magnetfeld, weshalb der Motor eine große Drehmomentwelligkeit aufweist. Kritisch ist hierbei der Anlauf solcher Motoren, weil es Rotorpositionen gibt, in denen kein genügendes Anlaufmoment erzeugt werden kann. Um den sicheren Anlauf trotzdem zu gewährleisten, besitzen solche Motoren ein speziell ausgebildetes Statorblechpaket, welches mit dem Rotor einen ungleichförmigen Luftspalt bildet. Dadurch entsteht ein Reluktanzmoment, das dafür sorgt, dass der Rotor nach Abschalten der Stromversorgung nicht in den für den Anlauf kritischen Positionen stehenbleibt. Das pulsierende Feld und das erhöhte Reluktanzmoment (Rast- oder Ruckmoment) erzeugen jedoch höhere Schwingungen im Rotor. Deshalb kommt für geräuschsensitive Anwendungen in aller Regel ein dreisträngiger EC-Motor mehr in Betracht als die ein- oder zweisträngigen Varianten.

Dabei hat ein solcher EC-Motor typischerweise eine ungefähr trapezförmige Luftspaltinduktion. Die Kommutierungselektronik eines dreistängigen Motors besteht aus einer Halbleiterbrücke mit sechs elektronischen Schaltelementen (Transistoren). Bei einer üblichen Blockkommutierung werden diese jeweils paarweise so eingeschaltet, dass ein magnetisches Stator-Drehfeld erzeugt wird. Damit ergeben sich sechs mögliche Schaltzustände, die sich periodisch abwechseln. Die Drehzahl des Motors kann durch die effektive Motorspannung gesteuert werden. Dazu wird entweder die Versorgungspannung, die sogenannte Zwischenkreisspannung, verändert, oder es wird einer der jeweils zwei leitenden Transistoren pulsweitenmoduliert getaktet (PWM).

Bei einem EC-Motor wird die Kommutierungselektronik in Abhängigkeit von der Rotorlage (Rotor-Drehstellung) gesteuert. Dazu muß folglich die jeweils aktuelle Rotorlage erfaßt werden. Vielfach werden dazu gesonderte Sensorelemente eingesetzt, wie beispielsweise Hall-Sensoren, die das magnetische Feld des Rotors erfassen. Bei einem dreisträngigen Motor werden meistens drei Sensorelemente verwendet (insbesondere digitale Hall-ICs). Findet an der Stelle eines Sensorelementes durch den sich drehenden Rotor ein magnetischer Polwechsel statt, ändert sich der Pegel des Sensorausgangssignals. Bei jedem Pegelwechsel werden die Schaltelemente der Steuerschaltung umgeschaltet. Diese Art der Rotorlage-Erfassung ist insbesondere bei Motoren mit extemer Kommutierungselektronik nachteilig. Zum einen machen die notwendigerweise innerhalb des Motors angeordneten Sensoren den Motor temperaturempfindlich und deshalb fehleranfällig. Zum anderen bilden die notwendigen Verdrahtungen und (Steck-) Verbindungen der Sensoren Fehlerquellen. Außer der erhöhten Fehleranfälligkeit ist auch der Zusatzaufwand nachteilig: Die Sensoren, ihre mechanischen Halterungen, die Kabelverbindungen mit Steckern usw. führen zu hohen Herstellungskosten.

Eine günstige Lösung bietet eine ebenfalls bekannte sensorlose Rotorlage-Erfassung. Hierbei bedeutet "sensorlos", dass keine Sensoren als gesonderte Bauelemente vorgesehen sind, um mechanische Größen direkt zu erfassen. Vielmehr werden für eine indirekte Erfassung der Rotorlage nur elektrisch meßbare Größen verwendet.

Dadurch entfallen nicht nur die Sensoren selbst, sondern auch ihre mechanischen Halterungen und elektrischen Anschlußleitungen. Eine kostengünstige und bei Lüfteranwendungen vielfach verwendete Ausführung wertet nur die Polarität der inneren Motorspannungen bzw. der induzierten Motorspannungen aus. Da bei einer Blockkommutierung außerhalb des eigentlichen Kommutierungsvorgangs immer nur zwei Wicklungsstränge bestromt werden, kann in einer jeweils stromlosen Motorleitung die innere Motorspannung, die vom Rotor in dem entsprechenden Wicklungsstrang induziert wird, direkt erfasst werden. Dazu werden hauptsächlich Komparatorschaltungen benötigt.

Nachteile der bekannten Blockkommutierung sind eine relativ große Drehmomentwelligkeit sowie auch schnelle Stromänderungen in den Kommutierungszeitpunkten. Beides kann zu ungünstigen akustischen Geräuschen führen.

Die DE 100 23 370 A1 beschreibt eine sogenannte 12-Schritt-Kommutierung, bei der durch Einführung von sechs zusätzlichen Kommutierungsschritten das Geräuschverhalten verbessert werden kann.

Sowohl bei der traditionellen 6-Schritt-Kommutierung als auch bei der erwähnten 12-Schritt-Kommutierung können aber Drehmomentschwankungen und die auftretenden schnellen Stromänderungen während der Kommutierung zu unerwünschten akustischen Effekten führen.

Die EP 1 104 087 A2 beschreibt Maßnahmen zur Steuerung eines Gleichstrommotors, wobei ein sinusähnlicher Spannungs-/Stromverlauf mit Lücken vorgegeben wird. Die hierfür geeigneten Motoren müssen eine ebenfalls sinusförmige Luftspaltinduktion, d. h. sinusförmig verlaufende induzierte Wicklungsspannungen aufweisen, und haben dadurch den Nachteil, dass sie gegenüber sonst üblichen EC-Motoren eine geringere Ausnutzung besitzen. Dies bedeutet, dass für das gleiche Motordrehmoment ein größeres Bauvolumen erforderlich ist. Für EC-Motoren mit im Wesentlichen trapezförmiger Luftspaltinduktion ist der bekannte sinusförmige Verlauf daher nicht geeignet. Zudem führen die eingefügten Stromlücken zu einer Zunahme der Drehmomentschwankung im Vergleich zur idealen Sinusform.

Zur Verminderung der Drehmomentwelligkeit schlägt das Dokument US 6 369 535 das Bestimmen von Führungsgrössen für die Strangströme vor unter Vorgabe eines Sollwertes für das Drehmoment und der aktuellen Rotorlage.

Der vorliegenden Erfindung liegt die Aufgabe zugrunde, zur Ansteuerung von bürstenlosen Gleichstrommotoren ein Verfahren und ein Steuersystem der eingangs beschriebenen, gattungsgemäßen Art zu schaffen, womit ein besonders ruhiger, geräuscharmer Betrieb mit hohem Wirkungsgrad unter Anwendung einer robusten, d. h. störungsunanfälligen und kostengünstigen Rotorlage-Erfassung ohne gesonderte Rotorlagesensoren erreicht wird.

Erfindungsgemäß ist dazu bei dem Verfahren nach Anspruch 1 bzw. bei dem für dieses Verfahren ausgelegten Steuersystem nach Anspruch 14 vorgesehen, dass die Wicklungsströme mit einem bestimmten, von dem Verlauf der in den Wicklungssträngen induzierten Polradspannungen abhängigen Soll-Verlauf derart vorgegeben werden, dass sie ein über die Rotor-Drehung hinweg vorbestimmtes Motordrehmoment bewirken, über die Motor-Drehung hinweg kontinuierlich ohne abrupte, schaltbedingte Sprünge verlaufen sowie Stromlücken für die sensorlose Rotorlage-Erfassung aufweisen.

Erfindungsgemäß wird somit der Motor bzw. seine Wicklungsstränge mit bezüglich ihres zeitlichen Verlaufs speziell erzeugten (generierten) Wicklungsströmen angesteuert, wobei die Verlaufsform so gewählt und vorgegeben wird, dass ein bestimmtes, vorzugsweise gleichförmiges (konstantes) Drehmoment entsteht. Durch die dabei erzeugten Stromlücken ist vorteilhafterweise eine sensorlose Rotorlage-Erfassung durch Auswertung der induzierten Polradspannungen möglich, indem diese jeweils am gerade nicht angesteuerten Wicklungsstrang erfasst werden können. Zudem werden nachteilige Stromsprünge bzw. rein. induktiv bestimmte Abschaltflanken durch eine langsame bzw. verlangsamte Stromkommutierung vermieden. Dies bedeutet, dass jeweils im Übergang zu einer Stromlücke hin der Strom nicht einfach abgeschaltet, sondern erfindungsgemäß nach einer bestimmten Funktion verlangsamt bis auf Null reduziert wird. Durch diese Vermeidung von schnellen Stromänderungen werden sonst übliche Kommutierungsgeräusche nahezu eleminiert, zumindest aber deutlich reduziert.

Zur Vorgabe der Wicklungsströme kann grundsätzlich eine beliebige geeignete Methode angewandt werden. So kann mit Vorteil ein Stromregler verwendet werden, dem die gewünschte, vorher festgelegte Stromform als Sollwert vorgegeben wird, und der dann die Istwerte der Ströme entsprechend auf die Sollwerte einregelt. Alternativ kann auch - ohne Strommessung - der zum Erreichen eines vorbestimmten Stromverlaufs notwendige Spannungsverlauf vorgegeben und beispielsweise in einem Speicher abgelegt werden. Ebenso denkbar ist auch eine dynamische Berechnung ("online") des erforderlichen Spannungsverlaufs während des Betriebs, indem z.B. ein mathematisches Modell des Motors in der Steuereinheit hinterlegt ist. Entsprechend dem so vorgegebenen "Referenzspannungsverlauf' wird dann die Statorspannung des Motors insbesondere durch Pulsweitenmodulation (PWM) vorgegeben.

Nach Anspruch 1 wird die Breite oder zutreffender die zeitliche Länge der Stromlücken in Anpassung an den jeweiligen Betriebszustand (insbesondere Beschleunigung bzw. stationärer Betrieb mit gleichförmiger (konstanter) Drehzahl) variiert, um dadurch den Wirkungsgrad noch zu maximieren. Bei einer relativ großen Beschleunigung wird eine größere Stromlücke vorgesehen, um trotz eventueller Interpolationsfehler eine sichere Erfassung und Auswertung der Polradspannung zu gewährleisten. Hierbei wird dann eine Reduzierung des Wirkungsgrades hinsichtlich eines besseren dynamischen Verhaltens des Motors in Kauf genommen. Im stationären Betrieb mit gleichförmiger Drehzahl wird die Stromlücke dagegen auf eine kleinere, für die Rotorlage-Erfassung gerade noch ausreichende Breite bzw. Länge reduziert, so dass insgesamt ein höherer Wirkungsgrad erzielt wird.

Es sei noch bemerkt, dass die Erfindung auch einen bürstenlosen Gleichstrommotor umfaßt, der unter Anwendung des erfindungsgemäßen Verfahrens mit einem Steuersystem nach der Erfindung ausgestattet ist.

Weitere vorteilhafte Ausgestaltungsmerkmale der Erfindung sind in den abhängigen Ansprüchen und der folgenden Beschreibung enthalten. Anhand der Zeichnungen soll die Erfindung beispielhaft näher erläutert werden. Dabei zeigen:

Fig. 1          ein Schaltbild eines erfindungsgemäßen Steuersystems in einer bevorzugten Ausführungsform zur Kommutierung eines dreisträngigen Motors,

Fig. 2 und 3    Diagramme zur Erläuterung des Standes der Technik, und zwar Fig. 2 das berechnete Drehmoment und Fig. 3 den Wicklungsstrom in einer Phase (einem Wicklungsstrang) eines herkömmlich blockkommutierten dreisträngigen EC-Motors,

Fig.4           ein Diagramm mit beispielhaften erfindungsgemäßen Stromformen mit Stromlücken, langsamer - hier linearer - Kommutierung und konstantem Drehmoment,

Fig. 5    ein weiteres Diagramm mit erfindungsgemäßen Stromformen wie in Fig. 4, hier jedoch mit sanfter Kommutierung gemäß einer "S-Kurve",

Fig. 6 bis 10    einige beispielhafte Stromform-Diagramme (nur für einen Wicklungsstrang a eines dreisträngigen EC-Motors) für ein konstantes Drehmoment m mit langsamer Stromkommutierung für unterschiedlich breite Stromlücken mit den dadurch entstehenden verschiedenen relativen Kupferverlusten $P_{Cu}/P_{Cu0}$ des Motors.

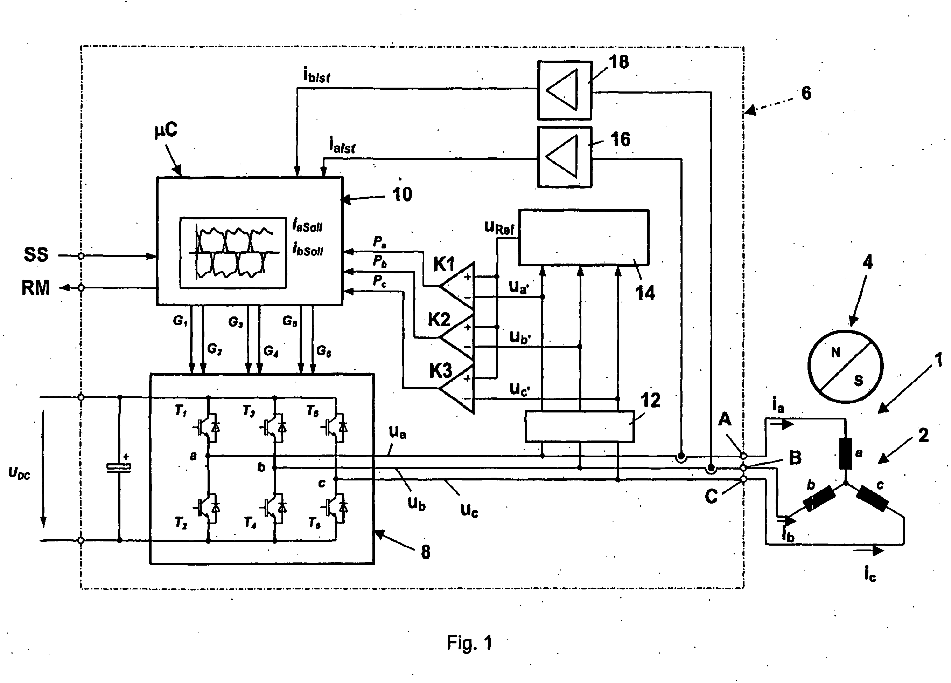

In Fig. 1 ist beispielhaft ein dreisträngiger kollektorfoser Gleichstrommotor 1 stark schematisch mit seinem Stator 2 und einem permanentmagnetischen Rotor 4 dargestellt. Der Stator 2 weist drei Wicklungsstränge a, b und c auf, die hier beispielsweise in Sternschaltung angeordnet sind. Die Wicklungsstränge a, b, c werden zum Drehantrieb des Rotors 4 von einer Steuerschaltung 6 zur Erzeugung eines magnetischen Statorfeldes in Abhängigkeit von der Rotorlage (Drehstellung) mit Wicklungsströmen $i_a$, $i_b$, $i_c$ angesteuert. Dazu weist die Steuerschaltung 6 eine Brückenschaltung 8 mit elektronischen Schaltelementen T1 bis T6 sowie eine diese ansteuernde Steuereinheit 10 auf. Als Schaltelemente werden bevorzugt geeignete Leistungshalbleiter (Transistoren) verwendet, und die Steuereinheit 10 kann mit Vorteil von einem Mikrocontroller μC gebildet sein. Bei der dargestellten Ausführung für einen dreisträngigen Motor besteht die Brückenschaltung 8 als Vollbrücke aus sechs elektronischen Schaltelementen T1 bis T6. Die Brückenschaltung 8 wird eingangsseitig über einen Gleichspannungszwischenkreis $U_{DC}$ gespeist und ist ausgangsseitig über drei Wicklungsanschlussleitungen A, B, C mit den drei Wicklungssträngen a, b, und c des Motors 1 verbunden. Die Schaltelemente T1 bis T6 werden von der Steuereinheit 10 über Steuersignale $G_1$ bis $G_6$ angesteuert. Insoweit ist dies an sich bekannt.

Mit den Ausgängen der Brückenschaltung 8, die die Wicklungsspannungen des Motors führen, ist zur sensorlosen Rotorlage-Erfassung ein Filter 12 verbunden, welches die PWM- bedingte Schaltfrequenz unterdrücken soll. Die hier gefilterten Spannungen werden einerseits direkt jeweils einem Komparator K1, K2, K3 zugeführt und andererseits einer Einrichtung 14 zur Motor-Sternpunktnachbildung, die eine Referenzspannung $u_{ref}$ erzeugt, die ebenfalls den Komparatoren K1, K2, K3 jeweils zugeführt wird. Die gefilterten Ausgangsspannungen $u'_a$, $u'_b$ und $u'_c$ werden mit der Referenzspannung $u_{ref}$ durch die Komparatoren K1 bis K3 verglichen, die hierdurch digitale Ausgangssignale $P_a$, $P_b$, $P_c$ liefern, die die Polarität der in den Motorwicklungssträngen induzierten Spannungen angeben. Diese Signale werden der Steuereinheit 10 zugeführt. Die Steuereinheit 10 kann einen Stellsignal-Eingang SS und einen Rückmeldungs-Ausgang RM aufweisen.

Femer ist bei der dargestellten, bevorzugten Ausführung eine Stromregelung vorgesehen. Dazu werden mindestens zwei der drei Motorströme, hier $i_a$ und $i_b$, gemessen und über Verstärker 16, 18 als Istwerte $i_{a\ ist}$ und $i_{b\ ist}$ der Steuereinheit 10 zugeführt. In der Steuereinheit 10 ist ein Stromregler integriert, der beispielsweise als digitaler Algorithmus hinterlegt sein kann. Dieser Stromregler vergleicht die Strom- Istwerte mit intern abgelegten, erfindungsgemäß vorgegebenen Strom-Sollwertverläufen $i_{aSoll}$, $i_{bSoll}$. Zur Regelung der Istwerte auf die Sollwerte kann mit Vorteil durch entsprechende Ansteuerung der Schaltelemente der Brückenschaltung 8 die Spannung an den Anschlüssen der Motor-Wicklungsstränge a, b, c über eine geeignete Pulsweitenmodulation (PWM) so geändert werden, dass sich Soll- und IstWerte möglichst gut entsprechen. Die Rotorlage-Erfassung erfolgt in an sich bekannter Weise sensorlos durch Auswertung der in den Motor-Wicklungssträngen a, b, c aufgrund des rotierenden permanentmagnetischen Rotors 4 induzierten Spannungen (Signale $P_a$, $P_b$, $P_c$).

Die vorliegende Erfindung betrifft nun speziell die Art und Weise, wie die Ströme zu verlaufen haben, um einerseits die sensorlose Rotorlage-Erfassung zu ermöglichen und andererseits gleichzeitig auch die anderen gesetzten Ziele der Geräuscharmut und des hohen Wirkungsgrades zu erreichen. Dies soll im Folgenden genauer erläutert werden:

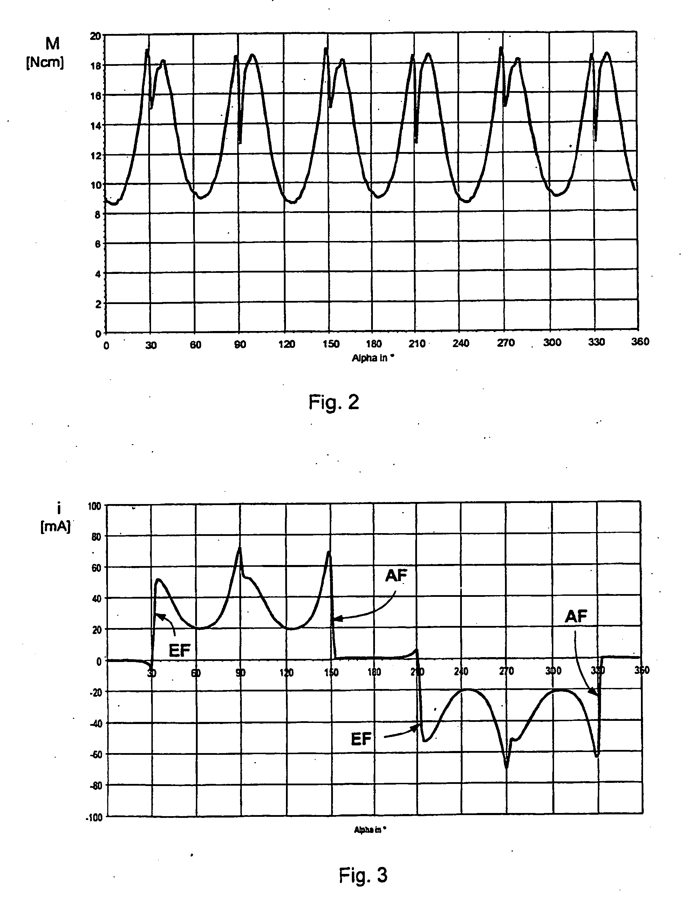

Dazu sei zunächst auf die Diagramme in Fig. 2 und 3 hingewiesen. Daraus wird deutlich, dass bei Anwendung einer herkömmlichen Blockkommutierung eine große Drehmoment-Welligkeit entsteht (Fig. 2) und in den Kommutierungszeitpunkten schnelle Stromänderungen auftreten (siehe die Abschaltflanken AF und auch die Einschaltflanken GF in Fig. 3). Beide Effekte führen zu nachteiligen Geräuschen.

Bei der gemäß vorliegender Erfindung bevorzugt vorgesehenen Stromregelung ist darauf zu achten, dass die Ströme so vorgegeben werden, dass sich Zeitphasen abwechseln, bei denen entweder alle drei oder nur zwei Wicklungsstränge bestromt werden. Dabei ist es grundsätzlich ohne Bedeutung, ob der Motor 1 in Stern (wie dargestellt) oder aber in Dreieck geschaltet ist. Der Einfachheit halber beziehen sich die folgenden Erläuterungen auf die in Fig. 1 dargestellte Sternschaltung, jedoch kann das erfindungsgemäße Verfahren analog auch für Motoren in Dreieckschaltung angewendet werden.

In den Phasen, in denen jeweils zwei Wicklungsstränge bzw. Motorleitungen bestromt sind, fließt in diesen Leitungen je ein Strom mit gleicher Amplitude, aber unterschiedlicher Polarität. Die Regelstrecke enthält folglich nur einen Freiheitsgrad. Der Regler regelt diesen einzigen Stromwert mit der Vorgabe der Motorspannung, was durch geeignete Modulationsverfahren realisiert werden kann.

In den Phasen, in denen alle drei Wicklungsstränge bzw. Motorleitungen bestromt sind, muß die Summe aller Motorströme Null ergeben, da der Sternpunkt nicht ausgeführt ist. Die Regelstrecke enthält folglich zwei Freiheitsgrade. Werden also zwei Motorströme geregelt, ergibt sich der dritte Strom automatisch. Um eine gute Regelungsqualität zu erreichen, ist es sinnvoll, auf eine Entkoppelung der Phasen zu achten, wie es auch bei stromgeregelten Drehstromantrieben üblich ist.

Wenn die innere Spannung des Motors, die sogenannte Polradspannung $u_p$, bekannt ist, die z.B. durch Messung an bestehenden Motoren oder durch eine numerische Feldberechnung ermittelt werden kann, kann aus den Motorströmen das Drehmoment berechnet werden. Die aktuelle mechanische Abgabeleistung $P_2$ des Motors ergibt sich unter Vernachlässigung von Reibung und Reluktanzmoment (Rastmoment $m_r$) aus der Gleichung:

$$(1)\ P_2 = u_{pa} \cdot i_a + u_{pb} \cdot i_b + u_{pc} \cdot i_c$$

Die Rotorlage-Erfassung ist nicht nur für die Feststellung der Kommutierungszeitpunkte notwendig, sondern ermöglicht auch die Drehzahlerfassung. Ist die Drehzahl bzw. die Winkelgeschwindigkeit $\omega$ bekannt, kann auch das Drehmoment m berechnet werden.

$$(2)\ m = P_2/\omega$$

Unter zusätzlicher Berücksichtigung des lageabhängigen Reluktanz- bzw. Rastmomentes $m_R(\alpha)$ ergibt sich das Drehmoment m nach folgender Gleichung:

$$(3)\ m = P_2/\omega + m_R(\alpha) = (u_{pa} \cdot i_a + u_{pb} \cdot i_b + u_{pc} \cdot i_c)\,/\,\omega + m_R(\alpha)$$

Die Rotorlage wird aus der Erfassung der Polradspannung bestimmt. Dazu wird die Spannung in der jeweils gerade nicht bestromten Motorleitung ausgewertet. Im einfachsten Fall wird dazu nur die Polarität dieser Spannung bzw. deren Nulldurchgänge erfasst. Dadurch ergeben sich sechs Impulse pro elektrische Umdrehung. Da bei vielen Anwendungen mit verhältnismäßig großem Trägheitsmoment, wie oft bei Lüfteranwendungen, sich die Drehzahl nur relativ langsam ändern kann, kann davon ausgegangen werden, dass die Rotorlage $\alpha$ zwischen zwei Impulsen mit Interpolation genau genug bestimmt werden kann. Werden in der Steuerung die rotorlageabhängigen Werte der Polradspannung $u_{pa}(\alpha)$, $u_{pb}(\alpha)$ und $u_{pc}(\alpha)$ gespeichert und die Motorströme $i_a(t)$, $i_b(t)$ und $i_c(t)$ gemessen, kann die Steuereinheit 10 "online" in jedem Zeitpunkt das aktuelle Drehmoment m bzw. die für ein bestimmtes Drehmoment erforderlichen Ströme berechnen. Die gleichen Berechnungen können aber auch "offline" durchgeführt werden, d. h. die für einen gewünschten Drehmomentverlauf erforderlichen Stromverläufe werden im Voraus berechnet und z. B. in Form einer Tabelle in der Steuereinheit abgelegt.

Erfindungsgemäß werden die Motorströme so vorgegeben, dass das berechnete Drehmoment m gleichförmig, vorzugsweise konstant bleibt. In den Phasen, in denen jeweils nur zwei Leitungen (z. B. a und b) Strom führen, gelten die folgenden Gleichungen

$$(4)\ i_a(t) + i_b(t) = 0$$

$$(5)\ [u_{pa}(\alpha) \cdot i_a(t) + u_{pb}(\alpha) \cdot i_b(t)]\,/\,\omega + m_R(\alpha) = m_{Soll} = \text{const.}$$

Aus diesen Gleichungen sind die gewünschten Motorströme - "offline" oder in der Regelung "online" - zu berechnen. Dabei kann in einigen Fällen das Reluktanzmoment vernachlässigt werden, wodurch sich die Berechnungen wesentlich vereinfachen lassen.

In den Zeitphasen, in denen alle drei Motorleitungen bestromt sind, geltend die folgenden Gleichungen:

$$(6)\ i_a(t) + i_b(t) + i_c(t) = 0$$

$$(7)\ [u_{pa}(\alpha) \cdot i_a(t) + u_{pb}(\alpha) \cdot i_b(t) + u_{pc}(\alpha) \cdot i_c(t)]\ /\ \omega + m_R(\alpha) = m_{Soll} = \text{const.}$$

In diesem Fall haben die drei Motorströme nur zwei Gleichungen zu erfüllen. Deshalb ist eine zusätzliche Bedingung möglich, wonach üblicherweise die Verlustleistung, genauer gesagt der Kupferverlust $P_{cu}$, minimiert werden soll (nach der Beziehung $P = I^2 \cdot R$, wobei R der Wicklungswiderstand ist):

$$(8)\ P_{Cu} = R \cdot [\ i_a^2(t) + i_b^2(t) + i_c^2(t)] = \text{min.}$$

Wesentlich für die vorliegende Erfindung ist nun die Erkenntnis, dass statt dessen der dritte Freiheitsgrad dazu benutzt wird, um die Stromänderungsgeschwindigkeit während der Kommutierung zu reduzieren. Dadurch verschlechtert sich zwar der Wirkungsgrad, die akustischen Geräusche werden aber deutlich geringer, die sonst störenden Kommutierungsgeräusche verschwinden.

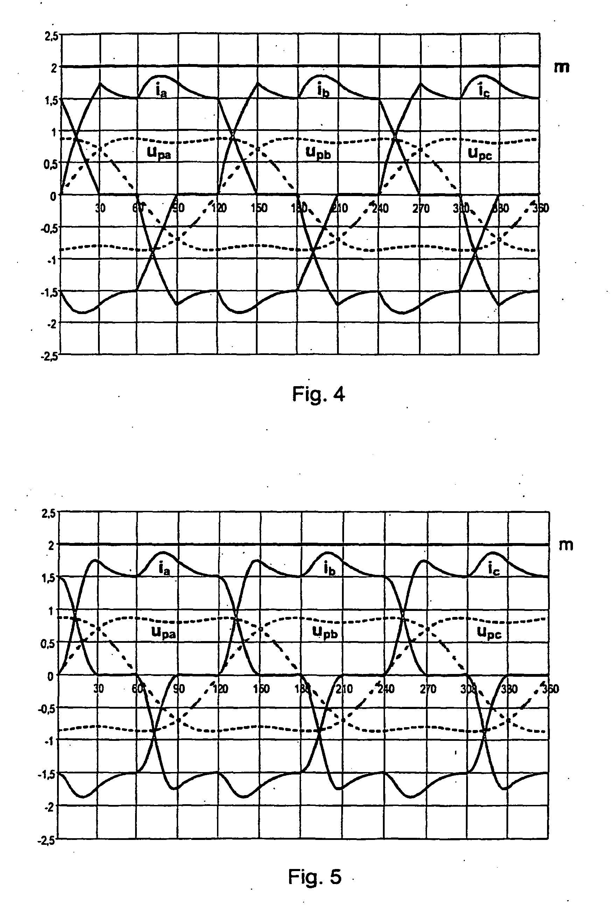

Im einfachsten Fall - siehe hierzu Fig. 4 - wird dazu der abzuschaltende Strom, d. h. der Strom in derjenigen Motorleitung, die in der nächsten Zeitphase stromlos bleiben soll, linear heruntergefahren:

$$(9)\ i_a(t) = i_a(t_1) \cdot (t_2-t)\ /\ (t_2 - t_1),\ \text{wenn } t_1 < t < t_2,$$

wobei $t_1$ der Zeitpunkt ist, wo die Zeitphase mit drei bestromten Motorleitungen beginnt, und $t_2$ der Zeitpunkt, wo die nächste Zeitphase mit zwei bestromten Leitungen beginnt. Dabei zeigt Fig. 4 neben dem Verlauf der Polradspannungen und des Drehmomentes die sich aus den Gleichungen ergebenden, gewünschten Stromformen (bei einem stromgeregelten Motor die Stromsollwerte), wenn die Längen aller Zeitphasen einheitlich z. B. 30° elektrischer Umdrehung entsprechen.

Alternativ dazu kann die Stromform zur Vermeidung der schnellen Änderungen di/dt gemäß Fig. 3 anstatt mit einem linearen Ablauf auch mit einer anderen Zeitfunktion vorgegeben werden. Gemäß Fig. 5 kann es sich um eine etwa S-förmig verlaufende Kurve z. B. gemäß einer Kosinus-Funktion handeln:

$$(10)\quad i_a(t) = i_a(t_1) \cdot [1 + \cos(\pi \cdot (t-t_1)\ /\ (t_2-t_1))]\ /\ 2,\ \text{wenn } t_1 < t < t_2$$

Bei einer "online-Realisierung" kann eine solche oder ähnliche Kurve (z. B. ein geeignetes Polynom) fortlaufend berechnet werden. Bei einer "offline-Realisierung" könnte der Verlauf dagegen z.B. normiert, in Form einer Tabelle, in der Steuereinheit abgelegt werden.

In Fig. 5 sind die Stromverläufe gemäß der Kosinus-Funktion erkennbar. Die Stromlücken im Stromverlauf jeweils im Bereich des Nulldurchgangs der Polradspannung ermöglichen eine kostengünstige und robuste sensorlose Erfassung der Rotorlage. Aufgrund der Stromlücken kann aber nicht der maximal mögliche Bereich zur Drehmomenterzeugung genutzt werden. Für das gleiche Motordrehmoment ist ein größerer effektiver Wicklungsstrom erforderlich. Durch die Lücken steigen deshalb die Kupferverluste im Motor gegenüber dem Betrieb ohne Stromlücken an. Mit zunehmender Breite (zeitlicher Länge) verschlechtert sich der Motorwirkungsgrad.

Durch die beschriebene Erfassung der Rotorlage über die Detektion der Nulldurchgänge der Polradspannung werden pro elektrischer Umdrehung des Motors in Abständen von je 60° el sechs Informationen über die augenblickliche Rotorlage erfasst. Zwischen den Nulldurchgängen muß der Drehwinkel interpoliert werden. Hierzu wird die Motordrehzahl durch Zeitmessung zwischen den Nulldurchgängen ermittelt. Beschleunigt der Motor, so ändert sich die Drehzahl allerdings zwischen zwei Nulldurchgängen. Zur Interpolation wird dann ein eigentlich zu kleiner Drehzahlwert verwendet, was dazu führt, dass die Stromlücke zu einem zu späten Zeitpunkt bezüglich des Nulldurchgangs der Polradspannung eingefügt wird. Dadurch könnte im schlimmsten Fall der Nulldurchgang auftreten, wenn der Wicklungsstrang noch nicht stromlos ist. Dies würde zu einem Verlust der Rotorlage-Information führen. Ein solcher Zustand muß vermieden werden, da sonst ein optimaler Motorbetrieb nicht mehr möglich wäre. Deshalb kann die Stromlücke nicht beliebig klein gewählt werden, wie es eigentlich zum Erreichen eines hohen Wirkungsgrades erforderlich wäre. Die Folge hiervon wäre eigentlich ein schlechterer Wirkungsgrad, als bei einem Betrieb mit Rotorlage-Sensoren.

In bevorzugter Ausgestaltung der Erfindung wird dieser Nachteil dadurch beseitigt, dass die Breite bzw. zeitliche Länge der Stromlücken in Abhängigkeit vom augenblicklichen Betriebszustand des Motors verändert wird. Bei relativ großer Beschleunigung wird eine größere Stromlücke eingefügt, um trotz Interpolationsfehler eine sichere Erkennung der Nulldurchgänge zu gewährleisten. In diesem Fall wird eine Reduzierung des Wirkungsgrades hinsichtlich eines besseren dynamischen Verhaltens des Motors in Kauf genommen. Im stationären Betrieb, d. h. mit gleichförmiger bzw. konstanter Drehzahl wird die Stromlücke dagegen auf eine kleine, für die Lageerfassung gerade noch ausreichende Breite reduziert, wodurch der Wirkungsgrad optimiert wird. Auch hierbei wird zum Erreichen eines ruhigen Motorbetriebs der Stromverlauf so vorgegeben, dass er zu einem gleichförmigen Motordrehmoment führt und gleichzeitig keine schnellen Stromänderungen aufweist.

Die Stromform kann für die gewünschte Stromlücken-Breite beispielsweise über die folgenden Beziehungen berechnet werden.

In Bereichen mit Stromlücke kann der Strom aus folgenden Gleichungen ermittelt werden:

$$(11) \quad i_a(\alpha) + i_b(\alpha) + i_c(\alpha) = 0$$

$$(12) \quad [u_{pa}(\alpha) \cdot i_a(\alpha) + u_{pb}(\alpha) \cdot i_b(\alpha) + u_{pc}(\alpha) \cdot i_c(\alpha)] / \omega + m_R(\alpha) = m_{Soll} = const.,$$

wobei entweder $i_a(\alpha) = 0$ oder $i_b(\alpha) = 0$ oder $i_c(\alpha) = 0$ ist.

In Bereichen, in denen alle Motor-Wicklungsstränge stromführend sind, kann die Berechnung der Sollströme über

$$(13) \quad i_a(\alpha) + i_b(\alpha) + i_c(\alpha) = 0$$

$$(14) \quad [u_{pa}(\alpha) \cdot i_a(\alpha) + u_{pb}(\alpha) \cdot i_b(\alpha) + u_{pc}(\alpha) \cdot i_c(\alpha)] / \omega + m_R(\alpha) = m_{Soll} = const$$

$$(15) \quad |di_{a,b,c}/d\alpha| < \lambda$$

$$(16) \quad |d^2 i_{a,b,c}/d\alpha^2| < \Lambda$$

$$(17) \quad P_{Cu} = R \cdot [i_a(\alpha)^2 + i_b(\alpha)^2 + i_c(\alpha)^2] = min$$

erfolgen. Um dabei eine sanfte Kommutierung zu erreichen, werden vorzugsweise die Stromsteilheit und die Änderung der Stromsteilheit ("Ruck") begrenzt. Es handelt sich hier folglich um die erste und zweite Ableitung des Stromes nach der Zeit bzw. nach dem Drehwinkel. Für die Stromsteilheit wird die Grenze $\lambda$ und für deren Änderung die Grenze A vorgegeben.

Die angegebenen Gleichungssysteme für die Strombereiche mit und ohne Stromlücke können zur Ermittlung der Soll-Stromverläufe nach üblichen numerischen Verfahren offline oder online gelöst werden. Beim Offline-Verfahren werden die Verläufe als Funktion vom Drehwinkel und der Breite der Stromlücke in der Regelung bzw. in der Steuereinheit 10 hinterlegt. Beim Online-Verfahren wird die Lösung während der Ausführung der Regelung fortlaufend neu berechnet.

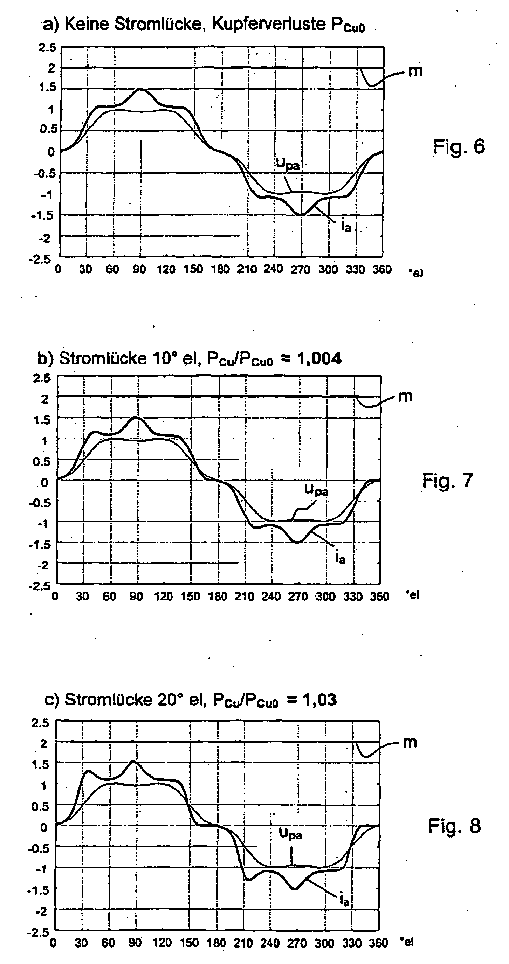

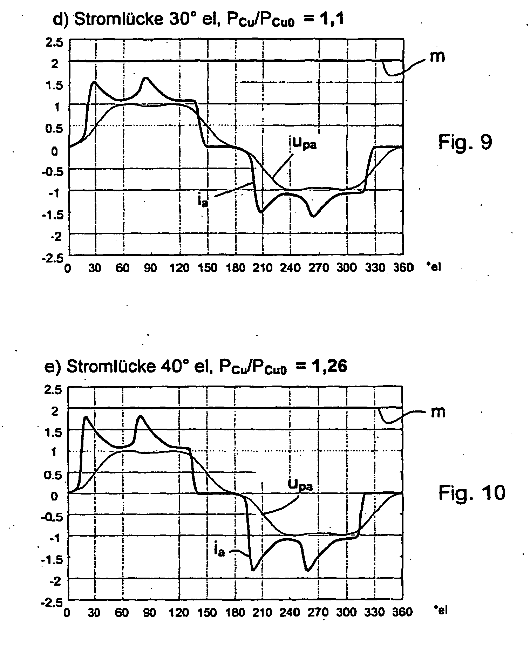

Die Figuren 6 bis 10 veranschaulichen beispielhaft die so berechneten Stromverläufe für verschieden breite Stromlücken unter Berücksichtigung der auf den optimalen Verlauf ohne Stromlücke (Fig. 6) bezogenen Kupferverluste des Motors. Vereinfachend wurde hierbei das Reluktanzmoment des Motors vernachlässigt. Die Stromlücke wird bevorzugt dann vergrößert, wenn der Motor beschleunigt, d. h. wenn der Nulldurchgang der Polradspannung zu einem früheren Zeitpunkt bezüglich des interpolierten Winkels auftritt. Dem Stromregler wird hierzu ein Strom-Sollwertverlauf, beispielsweise gemäß Fig. 9 oder 10, mit einer breiteren Stromlücke vor dem Nulldurchgang der Polradspannung zugeführt. Dies geschieht z. B. bei einem Anstieg des Drehmoment-Sollwertes (Stromsollwertamplitude), der bei gleichbleibendem Lastmoment zu einer Beschleunigung des Motors führt. Ist ein Drehzahlregler überlagert, so wird die Stromlücke bei einem ansteigenden Drehzahlsollwert vergrößert. Die Stromlücke wird aber auch dann vergrößert, wenn der Nulldurchgang der Polradspannung nicht innerhalb eines vordefinierten, auf den interpolierten Drehwinkel bezogenen Bereichs auftritt. Dies kann der Fall sein, wenn es bei gleichem Drehmomentsollwert zu einer Beschleunigung des Motors in Folge eines abnehmenden Lastmomentes kommen sollte.

Zweckmäßig wird die Stromlücke dann verkleinert, wenn die Winkelbeschleunigung des Motors klein ist, oder wenn er mit gleichförmiger Drehzahl (stationär) arbeitet. Dem Stromregler wird hierzu ein Stromsollwertverlauf beispielsweise gemäß Fig. 7 oder 8 mit einer relativ kleineren Stromlücke vor dem Nulldurchgang der Polradspannung zugeführt. Die Winkelbeschleunigung kann über die zeitliche Änderung der Motordrehzahl, die für die Winkelinterpolation bereits bekannt ist, ermittelt werden. Eine weitere vorteilhafte Möglichkeit ist der Vergleich des interpolierten Drehwinkels mit dem realen Drehwinkel des Motors zum Zeitpunkt des Nulldurchgangs der

Polradspannung. Bei einer kleinen Abweichung (kleiner Interpolationsfehler) ist die Winkelbeschleunigung klein und umgekehrt.

Nimmt die Motordrehzahl ab, dann tritt der Nulldurchgang der Polradspannung zu einem späteren Zeitpunkt bzgl. des interpolierten Winkels auf. Die erneute Bestromung nach der Stromlücke erfolgt deshalb bevorzugt nur dann, wenn der Nulldurchgang der Polradspannung erkannt wurde, um einen Verlust der Rotorlage-Information zu vermeiden.

Das beschriebene erfindungsgemäße Verfahren ermöglicht einen geräuscharmen Motorbetrieb mit gleichzeitig hohem Wirkungsgrad sowie gleichzeitig eine kostengünstige sensorlose Rotorlage-Erfassung über die Erfassung und Auswertung der Polradspannung des Motors. In einem drehzahl-stationären Betriebsfall kann ein vergleichbarer Motorwirkungsgrad erreicht werden, wie bei einem Betrieb mit Rotorlage-Sensoren. Dies ist insbesondere bei Anwendungen vorteilhaft, bei denen die Motordrehzahl nicht häufig geändert wird, wie es beispielsweise bei Ventilatoren und Pumpen der Fall ist.

Mit den oben beschriebenen Stromformen sind die gesetzten Ziele erreicht. Da das berechnete Drehmoment insbesondere konstant vorgegeben wird, kann ein tatsächliches Drehmoment mit nur minimalen Schwankungen erreicht werden. Die Kommutierung erfolgt äußerst sanft, was die Kommutierungsgeräusche praktisch verschwinden lässt. Weiterhin weist der Strom Stromlücken auf, die die einfache Auswertung der Polradspannung und dadurch die kostengünstige und zuverlässige sensorlose Erfassung der Rotorlage ermöglicht.

Die Erfindung ist nicht auf die dargestellten und beschriebenen Ausführungsbeispiele (dreisträngiger Motor, Sternschaltung, Magnetisierungsform usw.) beschränkt, sondern umfaßt auch alle im Sinne der Erfindungen gleichwirkenden Ausführungen. So kann der Motor auch eine andere Strangzahl aufweisen und/oder in Dreieckschaltung geschaltet sein. Femer sei nochmals erwähnt, dass die Erfindung nicht auf die Verwendung eines Stromreglers beschränkt ist, sondern die gewünschte Stromform kann auch ohne Strommessung durch geeignete Modulation der Spannung erzielt werden.

Im Übrigen ist die Erfindung auch nicht auf die in den unabhängigen Ansprüchen jeweils enthaltende Merkmalskombination beschränkt, sondern kann auch durch jede beliebige andere Kombination von Einzelmerkmalen aller insgesamt offenbarten Merkmale definiert sein. Insofern sind die Ansprüche lediglich als erster Formulierungsversuch für eine Erfindung zu verstehen.

**Patentansprüche**

1.  Verfahren zur elektronischen Kommutierung eines bürstenlosen Gleichstrommotors (1) mit einem permanentmagnetischen Rotor (4) und einem Stator (2) mit mehreren elektrisch versetzten Wicklungssträngen (a, b, c), wobei die Wicklungsstränge (a, b, c) zur Erzeugung eines magnetischen Statorfeldes zum Drehantrieb des Rotors (4) in Abhängigkeit von dessen Rotorlage mit Wicklungsströmen ($i_a$, $i_b$, $i_c$) angesteuert werden, wobei die Rotorlage sensorlos durch Auswertung einer an einer jeweils gerade nicht stromführenden Wicklungsanschlussleitung (A, B, C) meßbaren, vom Rotor (4) in den Wicklungssträngen (a, b, c) induzierten Polradspannung ($u_p$) erfasst wird, und wobei die Wicklungsströme ($i_a$, $i_b$, $i_c$) mit einem bestimmten, von dem Verlauf der in den Wicklungssträngen (a, b, c) induzierten Polradspannung ($u_{pa}$, $u_{pb}$, $u_{pc}$) abhängigen Soll-Verlauf derart vorgegeben werden, dass sie ein über die Rotor-Drehung hinweg vorbestimmtes Motor-Drehmoment ($m_{Soll}$) bewirken, über die Rotor-Drehung kontinuierlich ohne abrupte, schaltbedingte Sprünge verlaufen sowie Stromlücken für die sensorlose Rotortage-Erfassung aufweisen,
    **dadurch gekennzeichnet, dass** die Stromlücken bezüglich ihrer zeitlichen Länge in Abhängigkeit vom jeweiligen Betriebszustand automatisch derart geändert werden, dass eine Verlust-Minimierung in den Wicklungssträngen (a, b, c) erreicht wird, wobei bei Auftreten einer bestimmten, relativ größeren Rotor-Beschleunigung die Stromlücke derart vergrößert wird, dass sie jedenfalls noch eine sichere Erfassung der Rotorlage durch Auswertung der induzierten Polradspannung ermöglicht, während bei einer relativ geringen Beschleunigung oder im stationären, drehzahlkonstanten Betrieb zur Wirkungsgrad-Steigerung die Stromlücke auf eine kurze, für die Rotorlage-Erfassung gerade noch ausreichende Länge reduziert wird.

2. Verfahren nach dem Oberbegriff des Anspruchs 1,
**dadurch gekennzeichnet, dass** die Stromlücken bezüglich ihrer zeitlichen Länge in Abhängigkeit vom jeweiligen Betriebszustand automatisch derart geändert werden, dass eine Verlust-Minimierung in den Wicklungssträngen (a, b, c) erreicht wird, wobei die Wicklungsströme ($i_a$, $i_b$, $i_c$) in den Übergängen bezüglich mindestens ihrer ersten und zweiten Ableitung nach der Zeit begrenzt werden.

3. Verfahren nach dem Oberbegriff des Anspruchs 1,
**dadurch gekennzeichnet, dass** die Stromlücken bezüglich ihrer zeitlichen Länge in Abhängigkeit vom jeweiligen Betriebszustand automatisch derart geändert werden, dass eine Verlust-Minimierung in den Wicklungssträngen (a, b, c) erreicht wird, wobei die Wicklungsströme ($i_a$, $i_b$, $i_c$) in den Übergängen bezüglich mindestens ihrer ersten und zweiten Ableitung nach dem Drehwinkel ($\alpha$) begrenzt werden.

4. Verfahren nach einem der Ansprüche 1 bis 3,
**dadurch gekennzeichnet, dass** die Wicklungsströme ($i_a$, $i_b$, $i_c$) derart vorgegeben werden, dass ein über die Rotor-Drehung hinweg gleichförmiges, weitgehend konstantes Drehmoment ($m_{Soll}$) erzeugt wird.

5. Verfahren nach einem der Ansprüche 1 bis 4,
**dadurch gekennzeichnet, dass** die Wicklungsströme ($i_a$, $i_b$, $i_c$) so vorgegeben werden, dass sich über die Rotor-Drehung hinweg einerseits Drehwinkelbereiche, in denen alle Wicklungsstränge (a, b, c) stromführend sind, und andererseits Drehwinkelbereiche, in denen mindestens einer der Wicklungsstränge (a, b, c) aufgrund einer Stromlücke stromlos ist, abwechseln.

6. Verfahren nach Anspruch 5,
**dadurch gekennzeichnet, dass** die Wicklungsströme ($i_a$, $i_b$, $i_c$) derart vorgegeben werden, dass jeweils beim Übergang zwischen den Drehwinkelbereichen durch eine langsame, im Vergleich zu einer bloßen Umschaltung verzögerte Stromkommutierung der kontinuierliche, sprungfreie Wicklungsstrom-Verlauf erreicht wird.

7. Verfahren nach Anspruch 5 oder 6,
**dadurch gekennzeichnet, dass** die Wicklungsströme ($i_a$, $i_b$, $i_c$) jeweils im Übergang von einem stromführenden Drehwinkelbereich zu einem Drehwinkelbereich mit Stromlücke mit linearem Verlauf nach einer bestimmten Geraden-Funktion vorgegeben werden.

8. Verfahren nach Anspruch 5 oder 6,
**dadurch gekennzeichnet, dass** die Wicklungsströme ($i_a$, $i_b$, $i_c$) jeweils im Übergang von einem stromführenden Drehwinkelbereich zu einem Drehwinkelbereich mit Stromlücke mit einer bestimmten Kurvenform, insbesondere als S-Kurve z. B. nach einer Kosinus-Funktion, vorgegeben werden.

9. Verfahren nach einem der Ansprüche 1 bis 8,
**dadurch gekennzeichnet, dass** in jedem Drehwinkelbereich ohne Stromlücke die Wicklungsströme ($i_a$, $i_b$, $i_c$) derart unter Berücksichtigung ihrer Effektivwerte nach der Gleichung $i_a^2(\alpha) + i_b^2(\alpha) + i_c^2(\alpha) = \min$ vorgegeben werden, dass die Wicklungsverluste minimiert werden.

10. Verfahren nach einem der Ansprüche 1 bis 9,
**dadurch gekennzeichnet, dass** die Wicktungsströme ($i_a$, $i_b$, $i_c$) unter Verwendung eines Stromreglers vorgegeben werden, wobei Strom-Istwerte ($i_{a\,ist}$, $i_{b\,ist}$) mit dem vorgegebenen Soll-Verlauf verglichen und in Abhängigkeit von diesem Vergleich die Wicklungsstränge (a, b, c) so mit einer insbesondere pulsweitenmodulierten Spannung angesteuert werden, dass die Wicklungsströme bzw. deren Istwerte zumindest annähernd dem Soll-Verlauf entsprechen.

11. Verfahren nach einem der Ansprüche 1 bis 9,
**dadurch gekennzeichnet, dass** die Wicklungsströme ($i_a$, $i_b$, $i_e$) ohne Strom-Messung indirekt allein durch Vorgabe eines vorbestimmten, zum Erreichen des gewünschten Stromverlaufs notwendigen Spannungsverlaufes vorgegeben werden.

**12.** Verfahren nach Anspruch 10 oder 11, **dadurch gekennzeichnet, dass** der vorbestimmte Verlauf der Wicklungsströme oder der vorbestimmte Spannungsverlauf in einem Speicher abgelegt und/oder jeweils während des Betriebs berechnet wird.

**13.** Verfahren nach einem der Ansprüche 1 bis 12, **dadurch gekennzeichnet, dass** der Verlauf der Wicklungsströme ($i_a$, $i_b$, $i_c$) zusätzlich auch in Abhängigkeit von einem Rastmoment ($m_R$ ($\alpha$)) des Motors vorgegeben wird.

**14.** Steuersystem zur elektronischen Kommutierung eines bürstenlosen Gleichstrommotors (1) mit einem permanentmagnetischen Rotor (4) und einem Stator (2) mit mehreren elektrisch versetzten Wicklungssträngen (a, b, c), die zum Drehantrieb des Rotors (4) von einer Steuerschaltung (6) zur Erzeugung eines magnetischen Statorfeldes in Abhängigkeit von der Rotorlage mit Wicklungsströmen ($i_a$, $i_b$, $i_c$) angesteuert werden, wobei die Steuerschaltung (6) mehrere in einer Brückenschaltung (8) angeordnete elektronische Schaltelemente (T1 bis T6) und eine diese ansteuernde Steuereinheit (10) aufweist, sowie Mittel aufweist zur sensorlosen Erfassung der Rotorlage durch Auswertung einer an einer jeweils gerade nicht stromführenden Wicklungsanschlussleitung messbaren, vom Rotor in den Wicklungssträngen (a, b, c) induzierten Polradspannung, wobei die Wicklungsströme ($i_a$, $i_b$, $i_e$) mit einem bestimmten, von dem Verlauf der in den Wicklungssträngen (a, b, c) induzierten Polradspannung abhängigen Soll-Verlauf derart vorgegeben werden, dass sie ein über die Rotor-Drehung hinweg vorbestimmtes Motor-Drehmoment ($m_{Soll}$) bewirken, über die Rotor Drehung kontinuierlich ohne abrupte, schaltbedingte Sprünge verlaufen und Stromlücken für die sensorlose Rotorlage-Erfassung aufweisen, **gekennzeichnet durch** Mittel zum automatischen Ändern der Stromlücken bezüglich ihrer zeitlichen Länge in Abhängigkeit vom jeweiligen Betriebszustand, derart, dass eine Verlust-Minimierung in den Wicklungssträngen (a, b, c) erreicht wird, wobei bei Auftreten einer bestimmten, relativ größeren Rotor-Beschleunigung die Stromlücke derart vergrößert wird, dass sie jedenfalls noch eine sichere Erfassung der Rotorlage **durch** Auswertung der induzierten Polradspannung ermöglicht, während bei einer relativ geringen Beschleunigung oder im stationären, drehzahlkonstanten Betrieb zur Wirkungsgrad-Steigerung die Stromlücke auf eine kurze, für die Rotorlage-Erfassung gerade noch ausreichende Länge reduziert wird.

**15.** Steuersystem nach dem Oberbegriff des Anspruchs 14, **gekennzeichnet durch** Mittel zum automatischen Ändern der Stromlücken bezüglich ihrer zeitlichen Länge in Abhängigkeit vom jeweiligen Betriebszustand derart, dass eine Verlust-Minimierung in den Wicklungssträngen (a, b, c) erreicht wird, wobei die Wicklungsströme ($i_a$, $i_b$, $i_c$) in den Übergängen bezüglich mindestens ihrer ersten und zweiten Ableitung nach der Zeit begrenzt werden.

**16.** Steuersystem nach dem Oberbegriff des Anspruchs 14, **gekennzeichnet durch** Mittel zum automatischen Ändern der Stromlücken bezüglich ihrer zeitlichen Länge in Abhängigkeit vom jeweiligen Betriebszustand derart, dass eine Verlust-Minimierung in den Wicklungssträngen (a, b, c) erreicht wird, wobei die Wicklungsströme ($i_a$, $i_b$, $i_c$) in den Übergängen bezüglich mindestens ihrer ersten und zweiten Ableitung nach dem Drehwinkel ($\alpha$) begrenzt werden.

**17.** Steuersystem nach einem der Ansprüche 14 bis 16, **dadurch gekennzeichnet, dass** die Steuereinheit (10) von einem Mikrocontroller ($\mu$C) gebildet ist.

**18.** Steuersystem nach einem der Ansprüche 14 bis 17, **gekennzeichnet durch** Mittel zur sensorlosen Rotorlage-Erfassung durch Auswertung einer an einer jeweils gerade nicht stromführenden Wicklungsanschlussleitung (A, B, C) messbaren, vom Rotor (4) in den Wicklungssträngen (a, b, c) induzierten Polradspannung.

**19.** Bürstenloser Gleichstrommotor (1) mit einem Steuersystem nach einem der Ansprüche 14 bis 18.

**Claims**

**1.** Method for electronic commutation of a brushless DC motor (1) having a permanent-magnet rotor (4) and a stator (2) with a plurality of electrically displaced phase windings (a, b, c), the phase windings (a, b, c) being energised with winding currents ($i_a$, $i_b$, $i_e$) to generate a magnetic stator field for rotationally driving the rotor (4) in dependence on its rotor position, the rotor position being detected in a sensorless manner by evaluation of a synchronous generated voltage ($U_p$) which can be measured at a winding connecting line (A, B, C) not energised at a particular time and is induced in the phase windings (a, b, c) by the rotor (4), and the winding currents ($i_a$, $i_b$, $i_c$) being preset, with a given desired profile in dependence on the profile of the synchronous generated voltage ($U_{pa}$, $U_{pb}$, $U_{pc}$) induced in the phase windings (a, b, c), in such a manner that they bring about a motor torque ($m_{desired}$) predetermined over the rotor rotation, flow continuously without abrupt, switching-induced changes over the rotor rotation, and have current gaps for the sensorless detection of the rotor position,

**characterised in that** the current gaps are automatically changed, with respect to their temporal length in dependence on the respective operating state, in such a manner that a loss minimisation in the phase windings (a, b, c) is achieved, the current gap being increased, on occurrence of a given, relatively greater rotor acceleration, in such a manner that it nevertheless still enables a reliable detection of the rotor position by evaluation of the induced synchronous generated voltage, while the current gap is reduced for increased efficiency, in the case of a relatively low acceleration or in steady-state, constant-speed operation, to a short length just sufficient for the detection of the rotor position.

2. Method according to the preamble of Claim 1,
**characterised in that** the current gaps are automatically changed, with respect to their temporal length in dependence on the respective operating state, in such a manner that a loss minimisation in the phase windings (a, b, c) is achieved, the winding currents ($i_a$, $i_b$, $i_c$) being limited in the transitions with respect to at least their first and second derivative with respect to time.

3. Method according to the preamble of Claim 1,
**characterised in that** the current gaps are automatically changed, with respect to their temporal length in dependence on the respective operating state, in such a manner that a loss minimisation in the phase windings (a, b, c) is achieved, the winding currents ($i_a$, $i_b$, $i_c$) being limited in the transitions with respect to at least their first and second derivative with respect to the angle of rotation ($\alpha$).

4. Method according to one of Claims 1 to 3,
**characterised in that** the winding currents ($i_a$, $i_b$, $i_c$) are preset in such a manner that a largely constant torque ($m_{desired}$) uniform over the rotor rotation is generated.

5. Method according to one of Claims 1 to 4,
**characterised in that** the winding currents ($i_a$, $i_b$, $i_c$) are preset so that, on the one hand, angle-of-rotation regions in which all the phase windings (a, b, c) are energised and, on the other hand, angle-of-rotation regions in which at least one of the phase windings (a, b, c) is de-energised owing to a current gap, alternate over the rotor rotation.

6. Method according to Claim 5,
**characterised in that** the winding currents ($i_a$, $i_b$, $i_c$) are preset in such a manner that, on each transition between the angle-of-rotation regions, the continuous winding-current profile without abrupt changes is achieved by a slow current commutation which is delayed compared with a mere switching.

7. Method according to Claim 5 or 6,
**characterised in that** the winding currents ($i_a$, $i_b$, $i_c$) are preset, on each transition from an energised angle-of-rotation region to an angle-of-rotation region with a current gap, with a linear profile according to a given straight-line function.

8. Method according to Claim 5 or 6,
**characterised in that** the winding currents ($i_a$, $i_b$, $i_c$) are preset, on each transition from an energised angle-of-rotation region to an angle-of-rotation region with a current gap, with a given curve shape, in particular in the form of an S-curve, for example according to a cosine function.

9. Method according to one of Claims 1 to 8,
**characterised in that**, in each angle-of-rotation region without a current gap, the winding currents ($i_a$, $i_b$, $i_c$) are preset, while taking account of their root-mean-square values according to the equation $i_a^2 (\alpha) + i_b^2 (\alpha) + i_c^2 (\alpha) = $ min, in such a manner that the winding losses are minimised.

10. Method according to one of Claims 1 to 9,
**characterised in that** the winding currents ($i_a$, $i_b$, $i_c$) are preset using a current regulator, current actual values ($i_{a\ actual}$, $i_{b\ actual}$) being compared with the preset desired profile and, in dependence on this comparison, the phase windings (a, b, c) being energised with a, in particular pulse-width-modulated, voltage so that the winding currents or their actual values correspond at least approximately to the desired profile.

**11.** Method according to one of Claims 1 to 9,
**characterised in that** the winding currents ($i_a$, $i_b$, $i_c$) are preset indirectly, without current measurement, solely by presetting a predetermined voltage profile required for achieving the desired current profile.

**12.** Method according to Claim 10 or 11,
**characterised in that** the predetermined profile of the winding currents or the predetermined voltage profile is stored in a memory and/or calculated in each case during operation.

**13.** Method according to one of Claims 1 to 12,
**characterised in that** the profile of the winding currents ($i_a$, $i_b$, $i_c$) is preset additionally also in dependence on a cogging torque ($m_R(\alpha)$) of the motor.

**14.** Control system for electronic commutation of a brushless DC motor (1) having a permanent-magnet rotor (4) and a stator (2) with a plurality of electrically displaced phase windings (a, b, c), which are energised with winding currents ($i_a$, $i_b$, $i_c$) by a control circuit (6) to generate a magnetic stator field for rotationally driving the rotor (4) in dependence on the rotor position, the control circuit (6) having a plurality of electronic switching elements (T1 to T6) arranged in a bridge circuit (8) and a control unit (10) driving these switching elements, and also means for sensorless detection of the rotor position by evaluation of a synchronous generated voltage which can be measured at a winding connecting line not energised at a particular time and is induced in the phase windings (a, b, c) by the rotor, the winding currents ($i_a$, $i_b$, $i_c$) being preset, with a given desired profile in dependence on the profile of the synchronous generated voltage induced in the phase windings (a, b, c), in such a manner that they bring about a motor torque ($m_{desired}$) predetermined over the rotor rotation, flow continuously without abrupt, switching-induced changes over the rotor rotation, and have current gaps for the sensorless detection of the rotor position,
**characterised by** means for automatically changing the current gaps with respect to their temporal length in dependence on the respective operating state in such a manner that a loss minimisation in the phase windings (a, b, c) is achieved, the current gap being increased, on occurrence of a given, relatively greater rotor acceleration, in such a manner that it nevertheless still enables a reliable detection of the rotor position by evaluation of the induced synchronous generated voltage, while the current gap is reduced for increased efficiency, in the case of a relatively low acceleration or in steady-state, constant-speed operation, to a short length just sufficient for the detection of the rotor position.

**15.** Control system according to the preamble of Claim 14,
**characterised by** means for automatically changing the current gaps with respect to their temporal length in dependence on the respective operating state in such a manner that a loss minimisation in the phase windings (a, b, c) is achieved, the winding currents ($i_a$, $i_b$, $i_c$) being limited in the transitions with respect to at least their first and second derivative with respect to time.

**16.** Control system according to the preamble of Claim 14,
**characterised by** means for automatically changing the current gaps with respect to their temporal length in dependence on the respective operating state in such a manner that a loss minimisation in the phase windings (a, b, c) is achieved, the winding currents ($i_a$, $i_b$, $i_c$) being limited in the transitions with respect to at least their first and second derivative with respect to the angle of rotation ($\alpha$).

**17.** Control system according to one of Claims 14 to 16,
**characterised in that** the control unit (10) is formed by a microcontroller ($\mu$C).

**18.** Control system according to one of Claims 14 to 17,
**characterised by** means for sensorless detection of the rotor position by evaluation of a synchronous generated voltage which can be measured at a winding connecting line (A, B, C) not energised at a particular time and is induced in the phase windings (a, b, c) by the rotor (4).

**19.** Brushless DC motor (1) having a control system according to one of Claims 14 to 18.

**Revendications**

1. Procédé de commutation électronique d'un moteur DC sans balais (1) avec un rotor à aimant permanent (4) et un stator (2) avec plusieurs faisceaux d'enroulement (a, b, c) échelonnés électriquement, les faisceaux d'enroulement (a, b, c) étant commandés pour générer un champ magnétique avec le stator afin de faire tourner le rotor (4) en fonction de la position du rotor avec les courants des bobines ($I_a$, $I_b$, $I_c$), la position du rotor étant déterminée sans l'aide de capteur grâce à l'analyse d'une force électromotrice synchrone (Up) induite par le rotor (4) dans les faisceaux d'enroulement (a, b, c) et mesurable au niveau d'un câble de connexion de bobine (A, B, C) non conducteur, et les courants de bobine ($I_a$, $I_b$, $I_c$) étant prédéfinis avec un tracé théorique déterminé dépendant du tracé de la force électromotrice synchrone ($U_{pa}$, $U_{pb}$, $U_{pc}$) induite dans les faisceaux d'enroulement (a, b, c), de sorte qu'ils engendrent un couple-moteur ($m_{soll}$) prédéterminé par la rotation du rotor, qu'ils circulent de façon continue grâce à la rotation du rotor sans saut brusque de commutation et qu'ils comportent des interruptions de courant pour la détection de la position du rotor sans capteur,
**caractérisé en ce que** les interruptions de courant sont automatiquement modifiées par rapport à leur durée en fonction de l'état de fonctionnement correspondant, de sorte qu'une réduction de perte est atteinte dans les faisceaux d'enroulement (a, b, c), l'interruption de courant étant augmentée lors de la survenue d'une accélération déterminée relativement importante du rotor, de sorte qu'elle permet encore une détection fiable de la position du rotor grâce à l'analyse de la force électromotrice synchrone induite, alors qu'en cas d'accélération relativement faible ou en cas de fonctionnement stationnaire avec un nombre de tours constant pour augmenter le rendement, l'interruption de courant est réduite à une brève durée encore suffisante pour détecter la position du rotor.

2. Procédé selon le préambule de la revendication 1,
**caractérisé en ce que** les interruptions de courant sont automatiquement modifiées par rapport à leur durée en fonction de l'état de fonctionnement correspondant, de sorte qu'une réduction de perte est atteinte dans les faisceaux d'enroulement (a, b, c), les courants de bobine ($I_a$, $I_b$, $I_c$) étant limités dans les jonctions par rapport au moins à leur première et à leur seconde dérivation selon le temps.

3. Procédé selon le préambule de la revendication 1,
**caractérisé en ce que** les interruptions de courant sont modifiées automatiquement par rapport à leur durée en fonction de l'état de fonctionnement correspondant, de sorte qu'une réduction de perte est atteinte dans les faisceaux d'enroulement (a, b, c), les courants de bobine ($I_a$, $I_b$, $I_c$) étant limités dans les jonctions par rapport au moins à leur première et à leur seconde dérivation selon l'angle de rotation ($\alpha$).

4. Procédé selon l'une quelconque des revendications 1 à 3,
**caractérisé en ce que** les courants de bobine ($I_a$, $I_b$, $I_c$) sont prédéfinis, de sorte qu'un couple ($m_{soll}$) largement constant homogène est généré par l'intermédiaire de la rotation du rotor.

5. Procédé selon l'une quelconque des revendications 1 à 4,
**caractérisé en ce que** les courants de bobine ($I_a$, $I_b$, $I_c$) sont prédéfinis, de sorte que, d'une part, les zones d'angle de rotation dans lesquelles tous les faisceaux d'enroulement (a, b, c) sont conducteurs et, d'autre part, les zones d'angle de rotation dans lesquelles au moins un des faisceaux d'enroulement (a, b, c) n'est pas conducteur en raison d'une interruption de courant, changent en fonction de la rotation du rotor.

6. Procédé selon la revendication 5,
**caractérisé en ce que** les courants de bobine ($I_a$, $I_b$, $I_c$) sont prédéfinis, de sorte que, lors de la jonction entre les zones d'angle de rotation par une commutation de courant lente retardée comparé à une commutation simple, un tracé de courant de bobine continu sans interruption est atteint.

7. Procédé selon la revendication 5 ou 6,
**caractérisé en ce que** les courants de bobine ($I_a$, $I_b$, $I_c$) sont prédéfinis respectivement dans la jonction allant d'une zone d'angle de rotation conductrice à une zone d'angle de rotation avec une interruption de courant avec un tracé linéaire selon une fonction d'alignement déterminée.

8. Procédé selon la revendication 5 ou 6,
**caractérisé en ce que** les courants de bobine ($I_a$, $I_b$, $I_c$) sont prédéfinis respectivement dans la jonction allant d'une zone d'angle de rotation conductrice à une zone d'angle de rotation avec une interruption de courant avec une forme de courbe prédéterminée, plus particulièrement comme courbe en S, par exemple selon une fonction cosinusoïdale.

9. Procédé selon l'une quelconque des revendications 1 à 8,
**caractérisé en ce que** dans chaque zone d'angle de rotation sans interruption de courant, les courants de bobine ($I_a$, $I_b$, $I_c$) sont prédéfinis en fonction de leurs valeurs effectives selon l'équation $I_a^2(\alpha) + I_b^2(\alpha) = min$, de sorte que les pertes d'enroulement sont réduites.

10. Procédé selon l'une quelconque des revendications 1 à 9,
**caractérisé en ce que** les courants de bobine ($I_a$, $I_b$, $I_c$) sont prédéfinis avec l'utilisation d'un régulateur de courant, les valeurs réelles de courant ($I_{a\,ist}$, $I_{b\,ist}$) étant comparées au tracé théorique prédéfini et les faisceaux d'enroulement (a, b, c) étant commandés en fonction de cette comparaison avec une tension à modulation d'impulsions en largeur, de sorte que les courants de bobine et/ou leurs valeurs réelles correspondent au moins approximativement au tracé théorique.

11. Procédé selon l'une quelconque des revendications 1 à 8,
**caractérisé en ce que** les courants de bobine ($I_a$, $I_b$, $I_c$) sont prédéfinis sans mesure de courant de façon indirecte uniquement à l'aide de l'indication d'un tracé de tension prédéterminé requis pour atteindre le tracé de courant souhaité.

12. Procédé selon la revendication 10 ou 11,
**caractérisé en ce que** le tracé prédéterminé des courants de bobine ou le tracé de tension prédéterminé est enregistré dans une mémoire et/ou calculé respectivement pendant le fonctionnement.

13. Procédé selon l'une quelconque des revendications 1 à 12,
**caractérisé en ce que** le tracé des courants de bobine ($I_a$, $I_b$, $I_c$) est également prédéfini en fonction d'un moment d'arrêt ($m_R(\alpha)$) du moteur.

14. Système de commande pour la commutation électronique d'un moteur DC sans balais (1) avec un rotor à aimant permanent (4) et un stator (2) avec plusieurs faisceaux d'enroulements décalés électriquement (a, b, c), lesquels sont commandés pour faire tourner le rotor (4) grâce à un commutateur de commande (6) pour générer un champ magnétique pour le stator en fonction de la position du rotor avec les courants de bobine ($I_a$, $I_b$, $I_c$), le commutateur de commande (6) présentant plusieurs éléments de commutation (T1 à T6) électroniques disposés dans un pont de commutation (8) et une unité de commande (10) commandant celui-ci, ainsi qu'un moyen pour détecter sans capteur la position du rotor en analysant une force électromotrice synchrone induite par le rotor dans les faisceaux d'enroulement (a, b, c) mesurable au niveau respectivement d'un câble de connexion de bobine non conducteur, les courants de bobine ($I_a$, $I_b$, $I_c$) étant prédéfinis avec un tracé théorique prédéterminé dépendant du tracé de la force électromotrice synchrone induite dans les faisceaux d'enroulement (a, b, c), de sorte qu'ils entraînent un couple-moteur ($m_{soll}$) prédéterminé par la rotation du rotor, qu'ils circulent de façon continue grâce à la rotation du rotor sans saut brusque de commutation et présentent des interruptions de courant pour la détection de la position du rotor sans capteur, **caractérisé par** un moyen pour modifier automatiquement les interruptions de courant par rapport à leur durée en fonction de l'état de fonctionnement correspondant, de sorte qu'une réduction de perte est obtenue dans les faisceaux d'enroulement (a, b, c), l'interruption de courant étant augmentée lors de la survenue d'une accélération déterminée relativement importante du rotor, de sorte qu'elle permet à chaque fois une détection fiable de la position du rotor grâce à l'analyse de la force électromotrice induite, alors qu'en cas d'accélération relativement faible ou en cas de fonctionnement stationnaire avec un nombre de tours constant pour augmenter le rendement, l'interruption de courant est réduite à une brève durée encore suffisante pour détecter la position du rotor.

15. Système de commande selon le préambule de la revendication 14,
**caractérisé par** un moyen servant à modifier automatiquement les interruptions de courant par rapport à leur durée en fonction de l'état de fonctionnement correspondant, de sorte qu'une réduction de perte est obtenue dans les faisceaux d'enroulement (a, b, c), les courants de bobine ($I_a$, $I_b$, $I_c$) étant limités dans les jonctions par rapport au moins à leur première et à leur seconde dérivation selon le temps.

16. Système de commande selon le préambule de la revendication 14,
**caractérisé par** un moyen servant à modifier automatiquement les interruptions de courant par rapport à leur durée en fonction de l'état de fonctionnement correspondant, de sorte qu'une réduction de perte est obtenue dans les faisceaux d'enroulement (a, b, c), les courants de bobine ($I_a$, $I_b$, $I_c$) étant limités dans les jonctions par rapport au moins à leur première et à leur seconde dérivation selon l'angle de rotation ($\alpha$).

17. Système de commande selon l'une quelconque des revendications 14 à 16,

**caractérisé en ce que** l'unité de commande (10) est formée par un microcontrôleur ($\mu$C).

18. Système de commande selon l'une quelconque des revendications 14 à 17,
    **caractérisé par** un moyen servant à détecter la position du rotor sans capteur en analysant une force électromotrice synchrone induite par le rotor (4) dans les faisceaux d'enroulement (a, b, c) mesurable au niveau d'un câble de connexion de bobine (A, B, C) non conducteur.

19. Moteur à courant continu sans balais (1) avec un système de commande selon l'une quelconque des revendications 14 à 18.

Fig. 1

EP 1 499 008 B1

Fig. 2

Fig. 3

Fig. 4

Fig. 5

a) Keine Stromlücke, Kupferverluste $P_{Cu0}$

Fig. 6

b) Stromlücke 10° el, $P_{Cu}/P_{Cu0} = 1{,}004$

Fig. 7

c) Stromlücke 20° el, $P_{Cu}/P_{Cu0} = 1{,}03$

Fig. 8

d) Stromlücke 30° el, $P_{Cu}/P_{Cu0}$ = 1,1

Fig. 9

e) Stromlücke 40° el, $P_{Cu}/P_{Cu0}$ = 1,26

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10023370 A1
- EP 1104087 A2

- US 6369535 B